# EUROPEAN PATENT SPECIFICATION

(11) **EP 2 086 180 B1**
(45) Date of publication and mention of the grant of the patent: **28.05.2014**
(21) Application number: 07817295.4
(22) Date of filing: 21.11.2007
(51) Int. Cl.: H04W 8/02

(54) **METHOD AND FILTRATION SERVER FOR FILTERING COMMUNICATION CONTENT OF ROAMING USER**
VERFAHREN UND FILTERDIENSTRECHNER ZUM FILTERN VON KOMMUNIKATIONSINHALT EINES UMHERSTREIFENDEN NUTZERS
PROCÉDÉ ET SERVEUR DE FILTRAGE POUR FILTRER LE CONTENU DE COMMUNICATION D'UN UTILISATEUR ITINÉRANT

(30) Priority: 07.12.2006 CN 200610157353
(43) Date of publication of application: 05.08.2009
(73) Proprietor: Huawei Technologies Co., Ltd., Shenzhen, Guangdong Province 518129 (CN)
(72) Inventor: LIU, Yiling, Shenzhen Guangdong 518129 (CN); GU, Chong, Shenzhen Guangdong 518129 (CN); PENG, Jin, Shenzhen Guangdong 518129 (CN)
(74) Representative: Körber, Martin Hans
(86) International application number: PCT/CN2007/071105
(87) International publication number: WO 2008/067744

(56) References cited:
- EP-A1- 1 250 023
- EP-A1- 1 679 844
- EP-A2- 1 139 608
- WO-A1-2006/107647
- WO-A1-2006/118495
- CN-A- 1 492 694
- CN-A- 1 863 211
- US-A1- 2003 061 568
- VICTOR Y H KUEH ET AL: "Application of Context Transfer for Roaming in IP-Based Evolved 3G Networks" PERSONAL, INDOOR AND MOBILE RADIO COMMUNICATIONS, 2006 IEEE 17TH INTER NATIONAL SYMPOSIUM ON, IEEE, PI, 1 September 2006 (2006-09-01), pages 1-5, XP031023417 ISBN: 978-1-4244-0329-5
- SCHULZRINNE COLUMBIA U H TSCHOFENIG SIEMENS J MORRIS CDT J CUELLAR SIEMENS J POLK CISCO J ROSENBERG CISCO SYSTEMS H: "Common Policy: A Document Format for Expressing Privacy Preferences; draft-ietf-geopriv-common-policy-11.txt" IETF STANDARD-WORKING-DRAFT, INTERNET ENGINEERING TASK FORCE, IETF, CH, vol. geopriv, no. 11, 10 August 2006 (2006-08-10), XP015046727 ISSN: 0000-0004

## Description

### Field of the Invention

The present invention relates to content screening technologies in the field of communication, and particularly to a method and system for screening communication contents of a roaming user, and a visited-network content screening server, a home-network content screening server and a content screening server.

### Background of the Invention

At present, content screening technologies over a communication network typically include name list screening technologies, keyword screening technologies, image screening technologies, template screening technologies and category screening technologies, etc. The object to carry out content screening in a communication network is to keep malicious contents or undesirable contents away from a communication user, so that to ensure a civilized interaction in the communication network.

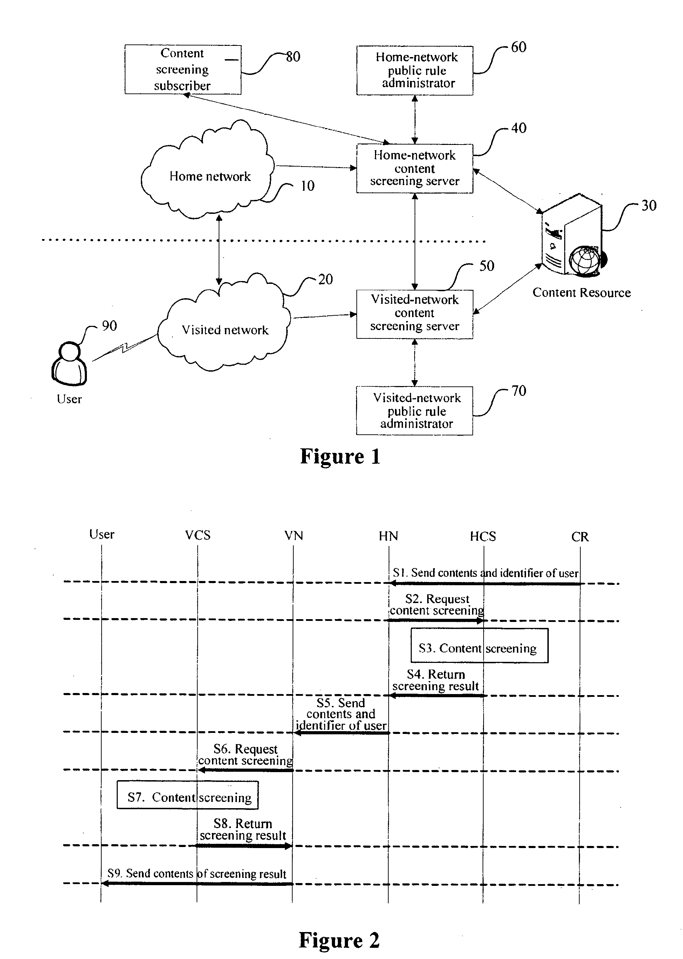

Figure 1 shows a system structure diagram of the prior art illustrating a user in a roaming state where the home network and the visited network thereof respectively have content screening mechanisms. Here, both the home network 10 and the visited network 20 are wireless communication networks, which include wireless access networks, and core networks (which may include service control networks, such as an IP Multimedia Subsystem (IMS), and may also include service networks and the like). The home network 10 and the visited network 20 can interact with each other via the core networks. The content resource 30 refers to a content provider, which may be an external entity independent of the wireless communication networks (such as an Internet content server), or alternatively may be an internal entity of the wireless communication networks (such as a short message center). Here, a content resource 30 that is independent of the wireless communication networks is taken as an example for description. The home-network content screening server 40 and the visited-network content screening server 50 respectively provide the home network 10 and the visited network 20 with content screening services. They may be separate entities managed by content screening providers, or alternatively may be entities managed by wireless communication network operators themselves. In order to facilitate description, here the home-network and the visited-network content screening servers respectively being independent of the wireless communication networks are taken as an example for description. The home-network content screening server 40 and the visited-network content screening server 50 may respectively interact with the content resource 30, and both of them may also interact with each other. The home-network public rule administrator 60 is responsible for managing public screening rules of the home network 10, i.e. the home-network content screening server 40 carries out screening processing for all contents based on the rules set by the home-network public rule administrator 60. In addition, if the content screening subscriber 80 sets content screening rules for related users or related user groups, when screening the contents of the related users or related user groups based on the rules set by the home-network public rule administrator 60, the home-network content screening server 40 also screens the contents based on the content screening rules set by the content screening subscriber 80. Similarly, the visited-network public rule administrator 70 is responsible for managing public screening rules of the visited network 20, i.e. the visited-network content screening server 50 carries out screening processing for all contents based on the rules set by the visited-network public rule administrator 70.

As a result, when the user 90 resides in the home network 10, screening rules to be complied with by related contents of the user 90 include the rules managed by the home-network public rule administrator 60 and the screening rules set by the content screening subscriber 80. When the user 90 roams to the visited network 20, in addition to comply with the above screening rules of the home network, the related contents of the user 90 further comply with the rules managed by the visited-network public rule administrator 70.

Figure 2 shows a diagram illustrating content screening processes that the content resource sends related contents to the roaming user residing in the visited network based on the system structure as illustrated in Figure 1. Specifically, the content screening processes are as follows:

S1. The Content Resource (CR) sends the contents and the identifier of the receiving-party user to the Home Network (HN) of the user;

S2. The HN sends the contents and the identifier of the receiving-party user to the Home-network Content Screening Server (HCS), and requests the HCS to carry out content screening. If the HCS cannot recognize the identifier of the receiving-party user brought by the CR, it is required for the HN to find a corresponding identifier of the user being recognizable to the HCS according to the identifier of the receiving-party user brought by the CR and send it to the HCS;

S3. The HCS matches out all screening rules (including public screening rules, and possibly also including private screening rules set by the content screening subscriber) that should be complied with by the contents in the HN, and carries out screening processing for the contents according to all the screening rules that should be complied with;

S4. The HCS sends the screening result and the identifier of the receiving-party user to the HN;

S5. The HN sends the screening result and the identifier of the receiving-party user to the Visited Network (VN);

S6. The VN sends the received screening result and the identifier of the receiving-party user to the Visited-network Content Screening Server (VCS), and requests the VCS to carry out content screening. If the VCS cannot recognize the identifier of the receiving-party user brought by the HN, it is required for the VN to find a corresponding identifier of the user being recognizable to the VCS according to the identifier of the receiving-party user brought by the HN and send it to the VCS;

S7. The VCS carries out screening processing for the received contents according to public screening rules of the visited network;

S8. The VCS sends the screening result and the identifier of the receiving-party user to the VN; and

S9. The VN determines an address for sending according to the identifier of the receiving-party user, encapsulates the screening result to a required data packet format, and sends the same to the roaming user.

However, in the prior art as described above, when the content resource sends the contents to the user roaming in the visited network, the sent contents need to be firstly screened by the home-network content screening server, and then screened by the visited-network content screening server. On the other hand, when the roaming user residing in the visited network sends contents to the content resource, the sent contents need to be firstly screened by the visited-network content screening server, and then screened by the home-network content screening server. Thus, this leads to problems of larger network processing resource consumption and longer screening time. Meanwhile, there is a greater possibility that the screening processing may be influenced due to single-point failures, therefore having a greater influence on the using experience of the user in a roaming state when receiving and/or sending contents. In WO 2006/107647 A1, it is disclosed an apparatus having a functionality of a policy decision function divided into two parts: one part representing a home network application function and the other part representing visited network bearer resources and local policies; the one part of the policy decision function supports communications with the application function, and represents the home network and application in a request for QoS control to the visited network; the other part of the policy decision function supports visited network interactions with a policy enforcement function, and represents visited network local policy related to resource utilization and roaming agreement-based policy. In Victor Y H Kueh et al: "Application of Context Transfer for Roaming in IP-Based Evolved 3G Networks", it is proposed the use of context transfer mechanisms, and the context transfer refers to the transfer of information from one network entity to another as a means of re-establish specific services in the new domain without having to perform the entire protocol exchanges from the beginning. In CN 1 492 694 A, it is provided a method for processing common filtering rules, including storing the user service files containing filtering rules in HSS; dividing all users in the system into groups to pick up common FCs of all users in each group; storing the common FCs of every group as a group user service file, and storing the unique FC as the ordinary user file; downloading the ordinary user file and the group user service file, and applying the common and the unique filtering rules of the said user at the same time.

### Summary of the Invention

The present invention provides a method for screening communication contents of a roaming user, to solve the problems of network processing resource waste and longer processing time when screening processing is carried out for the received and/or sent contents of the roaming user residing in the visited network.

The present invention further provides an associated content screening server according to claim 7 and an associated computer program product according to claim 9.

In order to solve the above problems, the present invention provides a method for screening communication contents of a roaming user, which includes processes of:
obtaining, by a second wireless network of the roaming user, a screening rule of a first wireless network of the roaming user which is used for screening received and/or sent contents of the user;
converting, by the second wireless network of the roaming user, the obtained screening rule into syntax and semantics recognizable to the second wireless network;
screening, by the second wireless network of the roaming user, the received and/or sent contents of the roaming user according to the converted screening rule, and screening, the received and/or sent contents of the roaming user according to a screening rule of the second wireless network itself; or
combining, by the second wireless network of the roaming user, at least one of the obtained screening rule and the converted screening rule with the screening rule of the second wireless network itself, and screening the received and/or sent contents of the roaming user according to the combined screening rule;
wherein the first wireless network is a home network, and the second wireless network is a visited
network; or the first wireless network is a visited network, and the second wireless network is a home network.

Accordingly, the present invention further provides a content screening server, which includes:
a rule obtaining unit, adapted to obtain, in a second wireless network, a screening rule of a first wireless network of a roaming user which is used for screening received and/or sent contents of the user;
a converting unit, adapted to convert, in the second wireless network, the screening rule obtained by the obtaining unit into syntax and semantics recognizable to the screening unit, and send the converted screening rule to a screening unit;
the screening unit, adapted to screen, according to the converted screening rule, the received and/or sent contents of the roaming user, and a self screening unit, adapted to screen, in the second wireless network, the received and/or sent contents of the roaming user according to a screening rule of the second wireless network itself; or
a combining unit, adapted to combine at least one of the screening rule obtained by the rule obtaining unit and the received screening rule converted by the converting unit with a screening rule of the second wireless network itself, and send the combined screening rule to a screening unit, and the screening unit, adapted to screen the received and/or sent contents of the roaming user according to the combined screening rule;
wherein the first wireless network is a home network, and the second wireless network is a visited network; or the first wireless network is a visited network, and the second wireless network is a home network.

The present invention may achieve advantageous effects as follows:

The technical solution of the present invention avoids carrying out content screening processing for the received and/or sent contents of the roaming user respectively at the home network and the visited network, thereby shortening the time delay of the content screening processing and saving network processing resources, and meanwhile reducing the possibility that the screening processing may be influenced due to single-point failures, thus the roaming user can carry out processing for the received and/or sent contents more quickly and conveniently, and the using experience of the user may be improved.

### Brief Description of the Drawings

Figure 1 shows a system structure diagram of the prior art illustrating a user in a roaming state where the home network and the visited network thereof respectively have content screening mechanisms;
Figure 2 shows a diagram illustrating content screening processes that the content resource sends related contents to the roaming user residing in the visited network based on the system structure as illustrated in Figure 1;
Figure 3 shows a diagram illustrating processing processes for obtaining a screening rule according to an embodiment of the present invention;
Figure 4 shows a diagram illustrating processing processes for obtaining a screening rule and screening the contents according to another embodiment of the present invention;
Figure 5 shows a diagram illustrating IMS control streams of two roaming modes according to an embodiment of the present invention;
Figure 6 shows a flow chart illustrating that a home IMS triggers a service layer application server HCS to obtain a screening rule so as to screen data passing into and/or out of a GGSN based on an IP-CAN roaming as illustrated in Figure 5 according to an embodiment of the present invention;
Figure 7 shows a diagram illustrating subsequent processing carried out for screening contents sent to the roaming user in an embodiment on the basis that the screening rule of the HN of the roaming user is obtained and is stored in the VN based on the processing processes as illustrated in the above Figure 3 or Figure 4 according to an embodiment of the present invention;
Figure 8 shows a diagram illustrating subsequent processing carried out for screening contents sent to the roaming user in an embodiment on the basis that the screening rule of the VN of the roaming user is obtained and is stored in the HN based on the processing processes as illustrated in the above Figure 6 according to an embodiment of the present invention;
Figure 9 shows a flow chart illustrating subsequent processing carried out for updating the obtained screening rule on the basis that the screening rule of the HN of the roaming user is obtained and is stored in the VN based on the processing processes as illustrated in the above Figure 3 or Figure 4;
Figure 10 shows a diagram illustrating processing processes for obtaining a screening rule and screening the contents according to yet another embodiment of the present invention;
Figure 11 shows a diagram illustrating subsequent processing carried out for screening contents sent to the roaming user in an embodiment on the basis that the screening rule of the HN of the roaming user is obtained and is stored in the VN based on the processing processes as illustrated in the above Figure 10;
Figure 12 shows a diagram illustrating processing according to an embodiment that the VCS deletes the obtained screening rule;
Figure 13 shows a diagram illustrating processing according to another embodiment that the VCS deletes the obtained screening rule;
Figure 14 shows a diagram illustrating interfaces where the content screening technology is implemented in a WCDMA R99 system;
Figure 15 shows a diagram illustrating interfaces where the content screening technology is implemented in an IMS-based network architecture according to an embodiment of the present invention;
Figure 16 shows a diagram illustrating the content screening technology being implemented in a WCDMA R99 system; and
Figure 17 shows a diagram illustrating a system structure resulted from implementation of the above embodiments of the present invention and illustrating processing structures inside the VCS and the HCS thereof.

### Detailed Description of the Embodiments

In existing wireless communication network technologies, there are mainly two processing modes for processing the contents of the roaming user: in the first mode, contents received by the roaming user are processed by the home network and the visited network in turn, and meanwhile contents sent by the roaming user are processed by the visited network and the home network in turn; in the second mode, the received and/or sent contents of the roaming user are only processed in the visited network. In the prior art, only the first mode is employed to process the contents received by the user, and there are problems of network processing resource waste and longer processing time delay. Meanwhile, with respect to the second mode, a solution for implementing screening of the received and/or sent contents of the roaming user is still unavailable.

The embodiments of the present invention not only may synchronously obtain the screening rule of the home network of the roaming user which is used for screening the received and/or sent contents of the user to the visited network in which the roaming user resides, thus to carry out screening processing for the received and/or sent contents of the roaming user directly in the visited network so as to avoid the problems of network processing resource waste and longer processing time delay in the case of the above first roaming mode, but also can be implemented in the above second roaming mode. Moreover, the screening rule of the visited network of the roaming user which is used for screening the received and/or sent contents of the user may be synchronously obtained to the home network of the roaming user, thus to carry out screening processing for the received and/or sent contents of the roaming user directly in the home network so as to avoid the problems of network processing resource waste and longer processing time delay in the case of the above first roaming mode, and this conforms to the home domain control principle of the IMS.

Specifically, the solution for implementing the above processes includes processes of: obtaining, by a second network of the roaming user, a screening rule of a first network of the roaming user which is used for screening received and/or sent contents of the user; and screening, according to the screening rule, the received and/or sent contents of the roaming user. Specifically, when the second network is a visited network, the first network is a home network; or when the second network is a home network, the first network is a visited network. In order to facilitate description, the case that the first network is a home network and the second network is a visited network is taken as an example for description hereinbelow.

The screening rule obtained from the home network of the roaming user by the visited network in which the roaming user resides is a screening rule of the home network which is used for screening all received and/or sent contents (herein being defined as a public rule). In the home network of the roaming user, if there are other screening rules set for the user by a corresponding content screening subscriber, the screening rule obtained by the visited network further includes the screening rule set by the content screening subscriber for the user (herein being defined as a private rule). If the home network and the visited network of the roaming user reach an agreement to employ the same public rule, the screening rule obtained from the home network by the visited network only contains the corresponding private rule.

Preferably, the Visited Network (VN) in which the roaming user resides obtains the screening rule from the Home Network (HN) of the user for the first time in but not limited to the following two cases:

The first case: the VN finds that the signaling interaction of this time represents that the user roams in this network, and triggers an action for obtaining the screening rule from the HN; and

The second case: when receiving contents sent to or from the roaming user for the first time, the VN sends related contents to the Visited-network Content Screening Server (VCS) to request content screening. When searching out that the user is a roaming user and the screening rule of the home network of the user has not been obtained, the VCS triggers an action for obtaining the screening rule from the HN.

In order to facilitate description hereinbelow, the Home-network Content Screening Sever HCS and the Home Network HN are described as two processing entities separate from each other. However, this is only to facilitate description, and the HCS is still a network element in the HN. Similarly, the VCS and the Visited Network VN are also described as two processing entities separate from each other, and the VCS is still a network element in the VN.

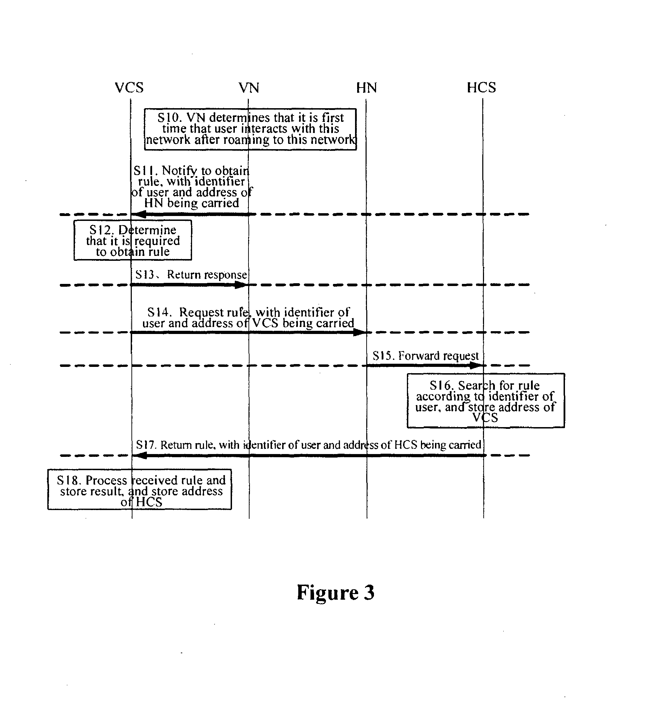

Figure 3 shows a diagram illustrating processing processes for obtaining a screening rule according to an embodiment of the present invention. Specifically, the processing processes are as follows:

S10. When processing a series of operations such as power-on registration, dormant handoff registration, voice/data service handoff-in (e.g. inter-MSC handoff, inter-PDSN handoff, inter-SGSN handoff, etc.) and the like of the user, the VN parses the address of the HN of the user, determines according to this that the user is a roaming user, and meanwhile can determine according to the operation that it is the first time that the roaming user performs signaling interaction with this network under the roaming state.

S11. The VN notifies the VCS to obtain the screening rule of the user from the home network. Specifically, the notification message sent by the VN carries the identifier of the user and the address of the HN thereof.

S12. The VCS searches the user roaming state record table according to the identifier of the user carried in the notification message sent from the VN. If the record of the user is not searched out, this means that it is required to obtain the screening rule of the user from the HN of the user. If the record of the user is searched out, this means that the screening rule of the user has already been obtained from the HN of the user, and the processes terminate after the S 13 is executed.

S13. The VCS returns a response to the VN to notify the VN that the notification message of the above S11 is received. If not receiving the response, the VN should resend the notification message of the above S11 after a certain period of time. If the response is still not received after repeatedly sending the notification message for specified times, it may be chosen to terminate the processing.

S14. The VCS requests the HN of the user for the content screening rule according to the address of the HN carried in the notification message sent from the VN. Specifically, the request message carries the identifier of the user and the address of the VCS.

S15. The HN parses the request message sent from the VCS and finds that it is a request message of content screening rule, then searches out whether the record of the user is recorded in the roaming-out user record table according to the identifier of the user carried in the request message. If there is no such a record, the record of the user is added; and then the HN forwards the received request message to the Home-network Content Screening Server (HCS).

S16. The HCS searches the user roaming state record table according to the identifier of the user carried in the received request message: if the roaming state record of the user is not searched out, the roaming state record of the user is added, and the roaming identifier thereof is set as roaming-out, and meanwhile the address of the VCS carried in the received request message is stored; if the HCS searches out that the roaming identifier in the roaming state record of the user is roaming-out, but the correspondingly stored address of the VCS is different from the address of the VCS carried in the received request message, this means that the users has already roamed from the VN corresponding to the previously stored address of the VCS to the VN corresponding to the received address of the VCS, then the HCS replaces the previously stored address of the VCS with the received address of the VCS; and if it is searched out that the roaming identifier in the roaming state record of the user is not-roaming, this means that the user directly roams from the HN to the VN, then the roaming identifier is set as roaming-out, and the received address of the VCS is stored.

The HCS also needs to search out whether a private screening rule is set for the user. If a private rule is set for the user, it is also required to search out the private rule corresponding to the user.

S17. The HCS feeds back the public rule of the HCS itself which is used for screening all contents to the VCS. If the HCS also searches out the private screening rule of the user, it is further required to feed back the searched-out private rule to the VCS, and meanwhile the feedback message carries the identifier of the user and the address of the HCS.

If not receiving this feedback message, the VCS should resend the request message of the above S 14 after a certain period of time. If still not receiving the feedback message sent from the HCS after repeatedly sending the request message for specified times, the VCS may chose to terminate the processes.

S18. The VCS processes the received screening rule according to requirements, and stores the identifier of the user and the screening rule correspondingly to each other into a rule database. On the other hand, the VCS adds the record of the user in the user roaming state record table, stores the address of the HCS correspondingly to the identifier of the user, and sets the roaming identifier of the user as roaming-in. The VCS processes the received screening rule in but not limited to the following ways:

Firstly, if the VCS and the HCS employ the same syntax to describe screening rules, there is no need to carry out identification and conversion of syntax. And if the VCS and the HCS employ different syntaxes to describe screening rules, it is required to carry out identification and conversion of syntax for the received screening rule, so that the VCS and the HCS can mutually understand syntax rules. Secondly, with respect to the semantics, the keywords are directly taken for use. If the VCS and the HCS employ the same category and hierarchy method, there is no need to carry out identification and conversion of semantics for the received screening rule. And if the VCS and the HCS employ different category and hierarchy methods, it is required to carry out identification and conversion processing of semantics for the received screening rule.

The VCS may store the obtained screening rule or the converted screening rule separate from its own screening rule and adopt the above rules in turn in the subsequent screening processing (it may first execute its own screening rule and then execute the obtained or the converted screening rule, or alternatively may first execute the obtained or the converted screening rule and then execute its own screening rule). Meanwhile, it may also combines the public screening rule of the VCS with the obtained screening rule of the HCS or the converted screening rule of the HCS, and carry out screening processing for the received and/or sent contents of the roaming user based on the combined screening rule.

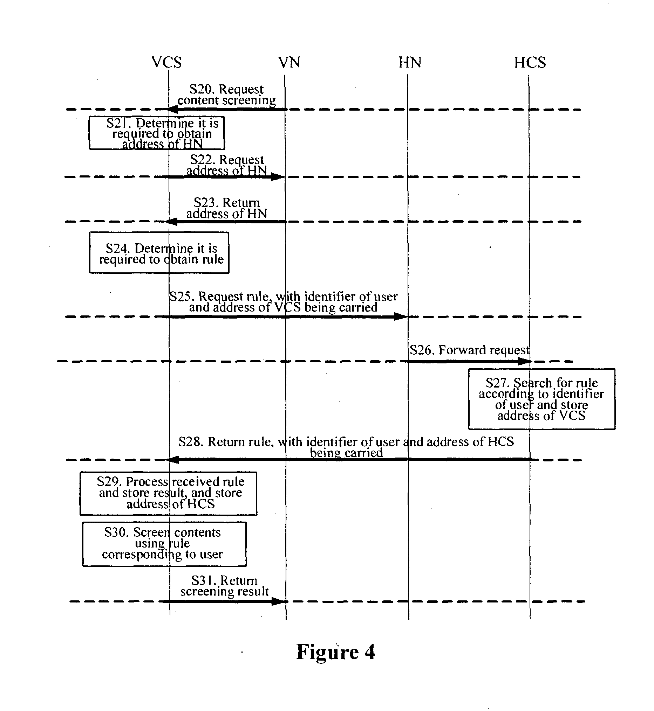

Figure 4 shows a diagram illustrating processing processes for obtaining a screening rule and screening contents according to another embodiment the present invention. Specifically, the processing processes are as follows:

S20. When receiving received and/or sent contents of the roaming user for the first time, the visited network searches the roaming-out user record table according to the identifier of the user, and sends the received contents and the identifier of the user to the VCS if the record of the user is not found, and requests the VCS to carry out content screening.

S21. The VCS searches the user roaming state record table according to the received identifier of the user: in the case that the record of the user is not searched out, it is determined that it is required to obtain the address of the HN from the VN.

S22. The VCS requests the address of the HN of the user. Specifically, the request message carries the identifier of the user.

S23. The VN searches for the address of the HN thereof according to the identifier of the user, and returns the searched-out address of the HN to the VCS.

S24. Upon receiving the address of the HN of the user fed back from the VN, the VCS determines that the user is a roaming-in user, and it is required to obtain the content screening rule from the HN of the user.

If it is determined that the user is a local user, the record of the user is added into the user roaming state record table, the roaming identifier is set as not-roaming, the processes are terminated, and the public rule of the VCS being matched with a possible private screening rule is directly used to carry out screening and a result is returned.

Processing processes of subsequent S25 ~ S29 are the same as or similar to those of S14 ~ S18 in the processing processes as illustrated in the above Figure 3. Specific description is provided in detail hereinabove and is not described repeatedly herein.

S30. The VCS matches out in the rule database all screening rules (including the screening rules that should be complied with by the user for receiving and/or sending contents in the HN, and further including the screening rule of the VCS for screening all the received and/or sent contents if the screening rule of the VCS for screening all the received and/or sent contents exists in the VCS) that should be complied with by the user in the roaming state according to the identifier of the user, and carries out screening processing for the received and/or sent contents of the roaming user of the first time using the matched-out screening rule. On the other hand, the VCS records the current time point at which the content screening processing is executed as the latest execution time.

S31. The VCS sends the screened contents and the identifier of the user to the VN (specifically, the VCS may directly feed back the screened contents to the element having sent the contents, or alternatively may feed back to other elements in the VN that have content sending abilities).

In addition, in the 3GPP R5 and R6, the IMS has already been defined as a multimedia service core network supporting all IP access networks, and can support any type of mobile or fixed, wired or wireless IP Connectivity Access Networks (IP-CAN). The IMS domain has roaming characteristics. No matter where the user accesses the network, the user can return to a home Serving-Call Session Control Function (S-CSCF) to obtain services by way of IMS roaming or IP-VAN roaming.

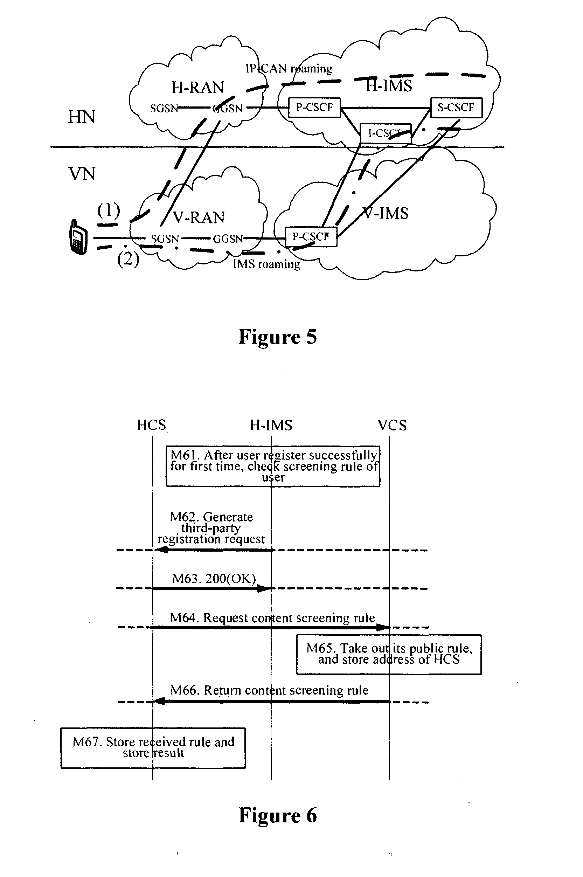

As shown in Figure 5, one type is based on the second roaming mode as described above. As illustrated by the dashed line (2) in the figure, the user is attached at the visited IP-CAN (data access is performed via the visited SGSN, GGSN when taking the GPRS as an example). The user accesses the IMS network via the visited Proxy-Call Session Control Function (P-CSCF). For the reason that the data paths are all in the visited network, the above described method for obtaining, in the visited network, a corresponding screening rule of the home network should be implemented. With respect to the IMS network, the visited P-CSCF can be added with a function for controlling the screening application server. Another type is based on the first roaming mode as described above. As illustrated by the dashed line (1) in the figure, the user is attached at the home IP-CAN (via the visited SGSN and the home GGSN). The IMS user accesses the IMS network via the home P-CSCF and it is very convenient and flexible in this case. Both the prior art and the method for obtaining a rule applied by the visited network can be used, and the method for obtaining a rule applied by the home network may also be used.

In other words, the embodiments of the present invention proposed that the screening rule of the visited network of the roaming user which is used for screening the received and/or sent contents of the user can be synchronously obtained to the home network of the roaming user, thus to carry out screening processing for the received and/or sent contents of the roaming user directly in the home network so as to avoid the problems of network processing resources waste and longer processing time delay in the case of the above first roaming mode, and this conforms to the home domain control principle of the IMS.

Figure 6 shows a flow chart illustrating that a home IMS triggers a service layer application server HCS to screen data passing into and/or out of a GGSN based on an IP-CAN roaming as illustrated in Figure 5, specifically including:

M61. After the user registers successfully for the first time, the H-IMS checks the downloaded screening rule of the user, which is used to control the registration to the application server for performing service applications.

M62. The H-IMS generates a third-party registration request according to the screening rule, and sends the third-party registration request to the HCS. Specifically, the registration request carries the identifier of the user, and preferably, the registration request may also carry the address of the VCS or the address of the VN IMS, or other identifiers indicating that the user is in a roaming state.

M63. Upon receiving the registration request, the HCS returns a 200 (OK) response to the H-IMS.

M64. If in the process M62, the registration request carries the address of the VCS or the address of the VN IMS, the HCS requests, directly or via the VN IMS, the VCS for the content screening rule. Specifically, the request carries the identifier of the user, and possibly may also carry the address of the HCS.

Specifically, if in the process M62, the registration request does not carry the address of the VCS or the address of the VN IMS, three circumstances respectively occur:

If the HCS is indicated that the user is roaming, but the address of the VN IMS or the address of the VCS is not provided, then the HCS needs to obtain the address of the VN IMS or the address of the VCS from the HSS, thus to perform the operation of the process M64.

If the HCS is not indicated whether the user is roaming, the HCS needs to obtain from the HSS whether the user is roaming, and obtain the address of the VN IMS or the address of the VCS if roaming, and perform the operation of the process M64 upon determining that the user is roaming.

If the HCS is indicated that the user is not roaming, or it is determined in the previous circumstance that the user is not roaming, then it is confirmed that the screening rule corresponding to the user only includes the content screening rule of the HN, and does not include the foregoing screening rule of the visited place.

M65. The VCS takes out its public content screening rule, and stores the identifier of the user and the address of the HCS correspondingly; or adds the identifier of the user in a corresponding list of the HCS.

M66. The VCS returns its public content screening rule to the HCS, where the identifier of the user and the address of the VCS may be carried.

M67. The HCS processes the received content screening rule as required and stores the identifier of the user, the address of the VCS and the screening rule correspondingly into the rule database. Specifically, the processes for processing the received screening rule by the HCS (possible syntax and semantic conversion, storing the obtained screening rule or the converted screening rule separately from its own screening rule so as to respectively execute them in subsequent screening, or combining it with its own screening rule and storing the same so as to be used in subsequent screening) are similar to corresponding parts in the process S18 as illustrated in Figure 3. Specific description is provided in detail hereinabove and is not described repeatedly herein.

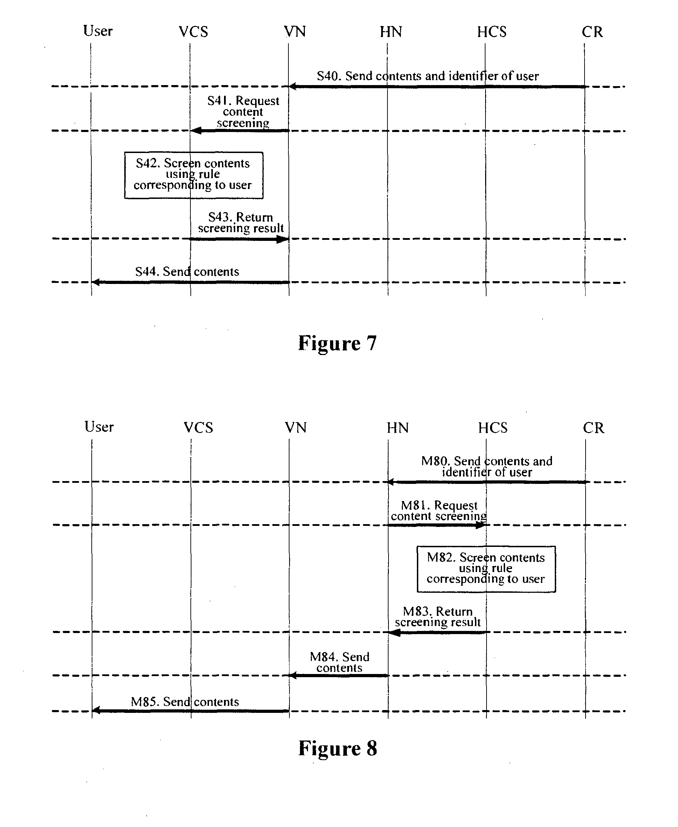

Figure 7 shows a diagram illustrating subsequent processing carried out for screening contents sent to the roaming user in an embodiment on the basis that the screening rule of the HN of the roaming user is obtained and is stored in the VN based on the processing processes as illustrated in the above Figure 3 or Figure 4. Specifically:

S40. The Content Resource (CR) directly sends the contents and the identifier of the receiving user to the VN (referring to utilizing the present second roaming mode); or the CR first sends the contents and the identifier of the receiving user to the HN, then the HN searches the roaming-out user record table according to the identifier of the user, knows that the user has roamed to a foreign network if the record of the user is searched out, directly shields the screening of the HCS with respect to the contents sent from the CR to the user, and directly forwards the contents sent from the CR and the identifier of the receiving user to the VN in which the user roams (referring to utilizing the present first roaming mode).

S41. The VN searches the roaming-out user record table, and forwards the contents and the identifier of the user sent from the CR to the VCS and requests the VCS to screen the contents if the record of the user is not searched out. If the VCS cannot recognize the identifier of the user brought by the CR, it is also required for the VN to find a corresponding identifier of the user being recognizable to the VCS according to the identifier of ihe user brought by the CR, and then send it to the VCS.

S42. The VCS searches the roaming user status record table according to the received identifier of the user, if it is found that the record of the roaming user is already recorded and the roaming identifier thereof is roaming-in, then it matches out in the rule database all screening rules (including the screening rules that should be complied with by the user for receiving and/or sending contents in the HN, and further including the screening rule of the VCS for screening all the received and/or sent contents if the screening rule of the VCS for screening all the received and/or sent contents exists in the VCS) that should be complied with by the user in the roaming state according to the identifier of the user, and carries out screening processing for the received and/or sent contents of the roaming user of each time using the matched-out screening rule. On the other hand, the VCS records the current time point at each time the content screening processing is executed as the latest execution time.

S43. The VCS sends the screened contents and the identifier of the user to the VN (specifically, the VCS may directly feed back the screened contents to the element having sent the contents, or alternatively may feed back to other elements in the VN that have contents sending abilities).

S44. The VN determines the receiving-party address according to the identifier of the receiving user, encapsulates the screened contents to a required data packet format, and sends the same to the receiving user (User).

Figure 8 shows a diagram illustrating subsequent processing carried out for screening contents sent to the roaming user in an embodiment on the basis that the screening rule of the VN of the roaming user is obtained and is stored in the HN based on the processing processes as illustrated in the above Figure 6, specifically including processes of:

M80. The CR directly sends the contents and the identifier of the user to the HN (such as the GGSN in the home network).

M81. The HN sends the received contents and the identifier of the user to the HCS, and requests the HCS to screen the contents of the user.

M82. The HCS matches out in the rule database all screening rules that should be complied with by the user in the roaming state according to the identifier of the user, and carries out screening processing for the received and/or sent contents of the roaming user of each time using the matched-out screening rule. On the other hand, the HCS records the current time point at each time the content screening processing is executed as the latest execution time.

M83. The HCS sends the screened contents and the identifier of the user to the HN.

M84. The HN determines the address of the VN SGSN according to the identifier of the receiving user, encapsulates the screened contents to a required data packet fonnat, and sends the same to the VN SGSN.

M85. The VN sends the contents to the receiving user (User).

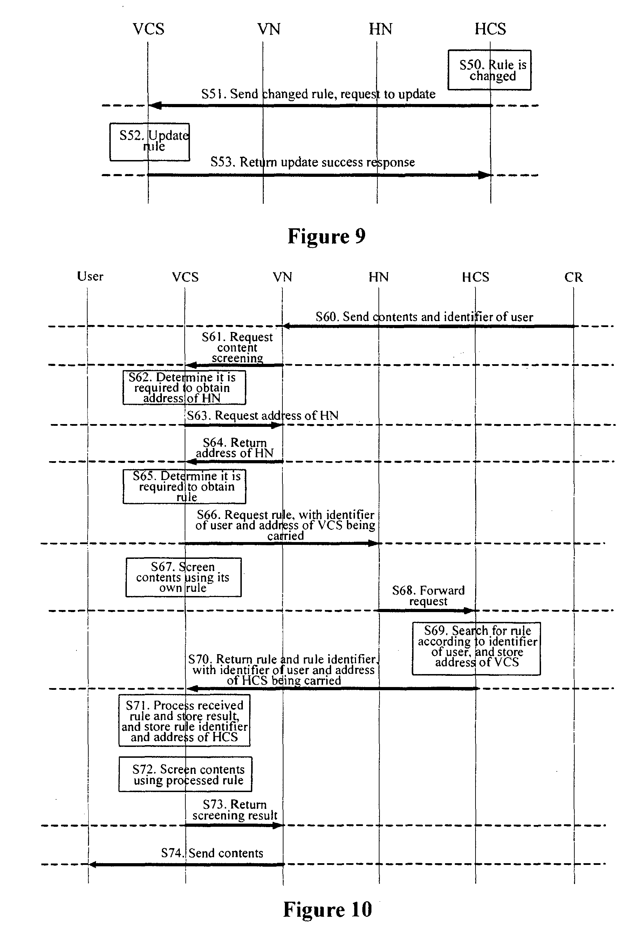

Figure 9 shows a flow chart illustrating subsequent processing carried out for updating the obtained screening rule on the basis that the screening rule of the HN of the roaming user is obtained and is stored in the VN based on the processing processes as illustrated in the above Figure 3 or Figure 4. Specifically, in the subsequent processes, the HCS triggers a screening rule updating operation when detecting that its own screening rule for screening all the received and/or sent contents (a public rule) is changed, and/or the private screening rule set for the roaming user is changed (S50). The HCS determines that the changing of the screening rule may influence all users in the roaming user status record table having a roaming identifier of roaming-out, and then sends the changed screening rule to the VCS according to the correspondingly stored address of the VCS, to request the VCS to update the currently stored screening rule of the HN, where the update request message carries the identifier of the roaming user (S51). The VCS searches the rule database according to the received identifier of the user, and updates the screening rule of the HN currently stored in the rule database based on the changed screening rule received (S52). The VCS returns an update success response to the HCS. If not receiving the response message, the HCS may resend the update request message of the above S51 after a certain period of time. If still not receiving the response fed back from the VCS after repeatedly sending the update request message for specified times, the HCS may consider terminating sending the update request message (S53).

Similarly, Figure 9 with the VCS and the HCS being replaced by each other may act as a flow chart illustrating subsequent processing carried out for updating the obtained screening rule on the basis that the screening rule of the VN of the roaming user is obtained and is stored in the HN based on the processing processes as illustrated in the Figure 6. The VCS triggers a screening rule updating operation when detecting that its own screening rule for screening all the received and/or sent contents (a public rule) is changed (S50). The VCS sends the changed screening rule to the HCS according to the correspondingly stored address of the HCS, to request the HCS to update the currently stored screening rule of the VN (S51).

Figure 10 shows a diagram illustrating processing processes for obtaining a screening rule and screening the contents according to yet another embodiment of the present invention. Specifically, the whole processing processes of S60~S74 is similar to those of S20~S31 as in the above Figure 4, except that the HCS also feed back the rule identifier corresponding to the screening rule that is fed back when feeding back the screening rule to the VCS. Then the VCS also stores the rule identifier corresponding to the screening rule when storing the screening rule sent from the HCS. Specifically, the screening rule identifier may be a rule ID, or alternatively may be an identifier resulting from the combination of the corresponding rule ID and the update time information and the like which may uniquely represent a rule. The rule identifier is not limited to be combined with the rule obtaining method of this embodiment, and may also be used in a rule obtaining method triggered when the roaming user is detected for the first time and in other cases. At the same time, being compared with S20~S31, this embodiment explicitly first executes its own screening rule, and meanwhile obtains the screening rule of the HCS, and then executes the obtained or the converted screening rule.

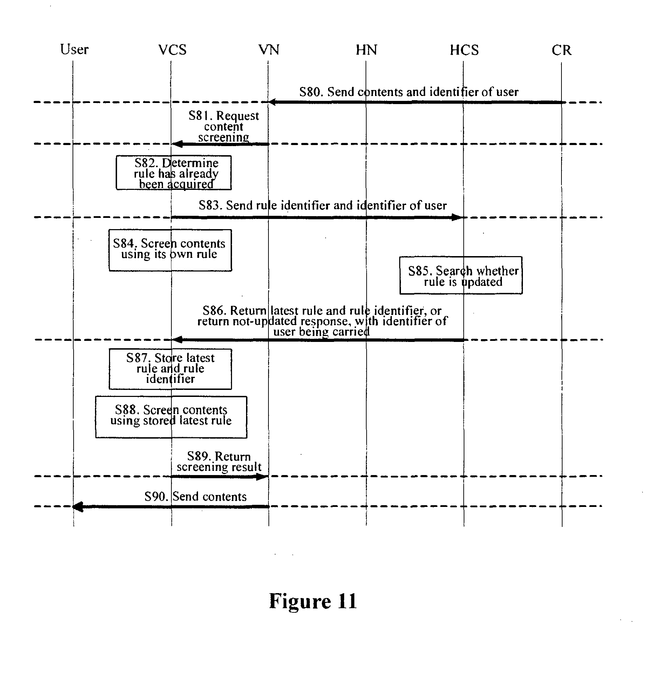

Figure 11 shows a diagram illustrating subsequent processing carried out for screening contents sent to the roaming user in an embodiment on the basis that the screening rule of the HN of the roaming user is obtained and is stored in the VN based on the processing processes as illustrated in the above Figure 10. Specifically:

S80. The Content Resource (CR) directly sends the contents and the identifier of the receiving user to the VN (referring to utilizing the present second roaming mode); or the CR first sends the contents and the identifier of the receiving user to the HN, then the HN searches the roaming-out user record table according to the identifier of the user, knows that the user has roamed to a foreign network if the record of the user is searched out, directly shields the screening of the HCS with respect to the contents sent from the CR to the user, and directly forwards the contents sent from the CR and the identifier of the receiving user to the VN in which the user roams (referring to utilizing the present first roaming mode).

S81. The VN searches the roaming-out user record table, and forwards the contents and the identifier of the user sent from the CR to the VCS if the record of the user is not searched out, requests the VCS to screen the contents. If the VCS cannot recognize the identifier of the user brought by the CR, it is also required for the VN to find a corresponding identifier of the user being recognizable to the VCS according to the identifier of the user brought by the CR, and then send it to the VCS.

S82. The VCS searches the roaming user status record table according to the received identifier of the user, if it is found that the record of the roaming user is already recorded and the roaming identifier thereof is roaming-in, it is indicated that the VCS has already acquired the corresponding content screening rule from the HCS.

S83. The VCS extracts the stored identifier of the user and the rule identifier stored correspondingly to the acquired content screening rule, and sends them to the HCS.

S84. The VCS first screens the contents sent from the CR using its own screening rule for screening all received and/or sent contents.

S85. The HCS matches the screening rule identifier stored correspondingly to the user according to the identifier of the user sent from the VCS, and carries out comparison to determine whether the matched-out screening rule identifier is the same as the screening rule identifier sent from the VCS. If the comparison results in difference, it is indicated that the screening rule in the HCS has already been updated.

S86. The HCS extracts the updated screening rule and the corresponding rule identifier thereof, and then returns a rule update response to the VCS, where the rule update response carries the identifier of the user, the updated screening rule and the corresponding rule identifier thereof. If the comparison of the above S85 results in identicalness, the HCS feeds back a rule-not-updated response message to the VCS. If not receiving the response message, the VCS may resend the message of the above S83 after a certain period of time. If still not receiving the response fed back from the HCS after repeatedly sending the message for specified times, the VCS may consider terminating sending the message, to continue with the S88 and subsequent processes.

S87. The VCS updates the corresponding local record based on the new screening rule and the corresponding new rule identifier thereof fed back from the HCS.

S88. The VCS matches out in the local rule database the latest content screening rule of the HN that the user needs to use according to the identifier of the user, and screens the contents sent from the CR based on the matched-out screening rule of the HN. On the other hand, the VCS also records the current time point at each time the content screening processing is executed as the latest execution time.

S89. The VCS sends the screened contents and the identifier of the user to the VN (specifically, the VCS may directly feed back the screened contents to the element having sent the contents, or alternatively may feed back to other elements in the VN that have contents sending abilities).

S90. The VN determines the receiving-party address according to the identifier of the receiving user, encapsulates the screened contents to a required data packet format, and sends the same to the receiving user (User).

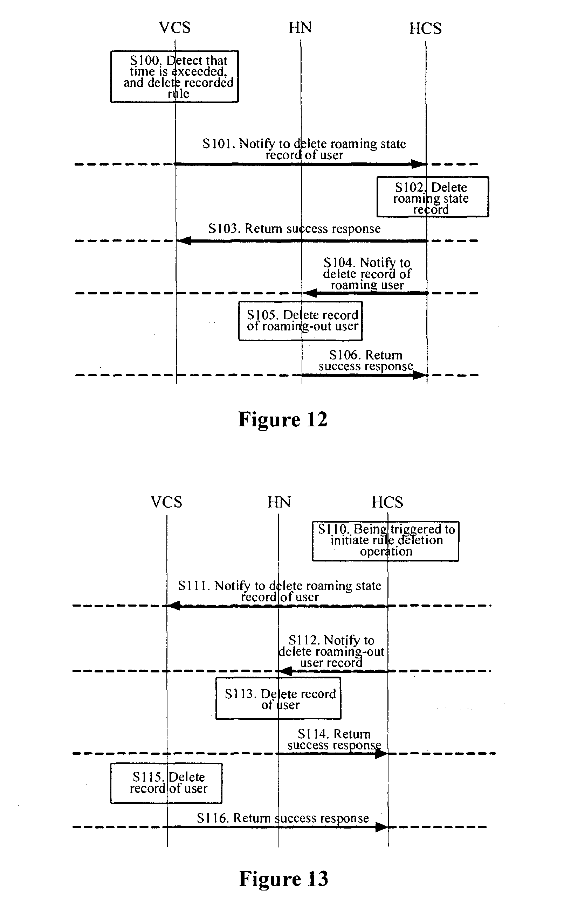

Figure 12 shows a diagram illustrating processing according to an embodiment that the VCS deletes the obtained screening rule. Specifically:

S100. When detecting that the time of the latest screening executed for the received and/or sent contents of the roaming user from now has exceeded a specified time length, the VCS deletes the roaming state record of the user from the user roaming state record table. The roaming state record contains the identifier of the user, the roaming identifier, the address of the HCS and the latest execution time, and may also contains the rule identifier corresponding to the screening rule. Meanwhile, the record of the user should also be deleted from the rule database, which record contains the identifier of the user and the corresponding screening rule thereof.

S101. The VCS notifies the HCS to delete the roaming state record of the user from the user roaming state record table. The notification message carries the identifier of the user and the address of the VCS.

S102. The HCS searches for the roaming state record of the user in the user roaming state record table according to the identifier of the user: if the roaming identifier in the roaming state record is roaming-out and the recorded address of the VCS is the same as the received address of the VCS, it deletes the roaming state record thereof; if the roaming identifier in the roaming state record is roaming-out and the recorded address of the VCS is different from the received address of the VCS, it is indicated that the user has roamed to a new VN; and if the roaming identifier in the roaming state record is not-roaming, it is indicated that the user has returned to the HN.

S103. The HCS returns a deletion success response to the VCS. If not receiving the response message, the VCS may resend the notification message of the above S101 after a certain period of time. If still not receiving the response fed back from the HCS after repeatedly sending the message for specified times, the VCS may consider terminating sending the notification message.

S104. The HCS notifies the HN to delete the record of the user from the roaming-out user record table, where the notification message carries the identifier of the user.

S105. The HN searches for the record of the user in the roaming-out user record table according to the identifier of the user, and deletes it.

S106. The HN returns a deletion success response to the HCS. If not receiving the response message, the HCS may resend the notification message of the above S104 after a certain period of time. If still not receiving the response fed back from the HN after repeatedly sending the message for specified times, the HCS may consider terminating sending the notification message.

Similarly, Figure 12 with the VCS and the HCS being replaced by each other may act as a flow chart illustrating subsequent processing carried out for deleting the obtained screening rule on the basis that the screening rule of the VN of the roaming user is obtained and is stored in the HN based on the processing processes as illustrated in the Figure 6. If detecting that the time of the latest screening executed for the received and/or sent contents of the roaming user from now has exceeded a specified time length, or receiving a release message issued by the H-IMS upon carrying out registration release, the HCS deletes the screening rule of the VN corresponding to the user from the rule database or restores the combined screening rule to contain only the screening rule of the HN. The HCS notifies the VCS to delete the address of the HCS that it holds, where the notification message carries the identifier of the user and the address of the HCS. The VCS deletes its record according to the identifier of the user, or deletes the identifier of the user from the corresponding user identifier list of the HCS, and returns a deletion success response to the HCS. For the reason that the screening server of Figure 6 is arranged at the place of the GGSN, thus subsequently there is no need to notify the VN to delete the record of the user. If this process is initiated by the H-IMS, it is required to return a corresponding response.

Figure 13 shows a diagram illustrating processing according to another embodiment that the VCS deletes the obtained screening rule. Specifically:

S110. When receiving a screening rule obtaining request message sent from the VCS, if the HCS searches out that the roaming identifier in the roaming state record of the user is roaming-out and the recorded address of the VCS is inconsistent with the address of the VCS carried in the received obtaining request message, it is indicated that the user has roamed from the original roaming place to a new VN, then the HCS triggers the VCS to delete the obtained screening rule.

On the other hand, when receiving the contents required to be screened, the HCS searched out that the roaming identifier in the roaming state record of the user is not-roaming, it is indicated that the user has returned to the local network after roaming in the foreign network, then the HCS triggers the VCS to delete the obtained screening rule.

S111. The HCS notifies the VCS to delete the roaming state record of the user from the user roaming state record table and the content screening rule of the user from the rule database. Specifically, the notification message contains the identifier of the user; the roaming state record includes information of the roaming identifier, the identifier of the user, the address of the HCS, the latest execution time, etc.; and the roaming identifier further includes roaming-in, roaming-out and not-roaming.

S 112. In addition, the HCS notifies the HN to delete the record of the user from the roaming-out user record table, where the notification message carries the identifier of the user.

S113. The HN deletes the record of the user from the roaming-out user record table according to the identifier of the user carried in the received notification message.

S114. The HN returns a deletion success response to the HCS. If not receiving the response message, the HCS may resend the notification message of the above S112 after a certain period of time. If still not receiving the response fed back from the HN after repeatedly sending the message for specified times, the HCS may consider terminating sending the notification message.

S115. The VCS deletes the roaming state record of the user from the user roaming state record table and the content screening rule of the HN of the user from the rule database according to the identifier of the user carried in the received notification message.

S116. The VCS feeds back a deletion success response to the HCS. If not receiving the response message, the HCS may resend the notification message of the above S111 after a certain period of time. If still not receiving the response fed back from the VCS after repeatedly sending the message for specified times, the HCS may consider terminating sending the notification message.

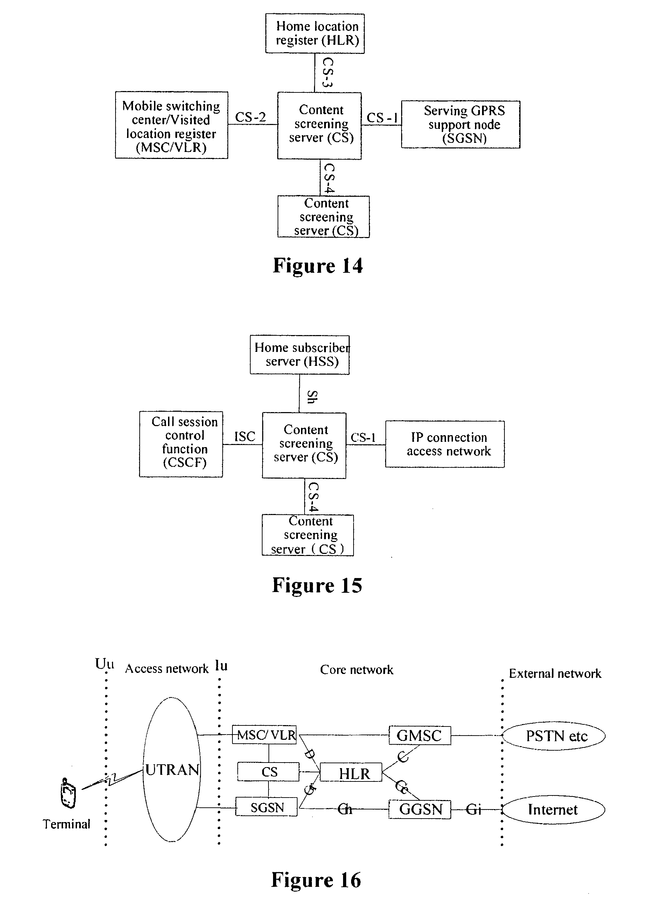

Figure 14 shows a diagram illustrating interfaces where the content screening technology is implemented in a WCDMA R99 system. Specifically, the Content Screening Server (CS) is provided with not only an SS7 address of the circuit domain but also an IP address of the packet domain. The CS-1 interface between the CS and the SGSN utilizes the GTP protocol (including a control part GTP-C, and a user part GTP-U). The CS-2 interface between the CS and the MSC/VLR utilizes the SS7 protocol. The CS-3 interface between the CS and the HLR only transmits signaling, and typically utilizes the MAP protocol of the SS7. The CS-4 interface between the CS and the CS utilizes the GTP protocol (including a control part GTP-C, and a user part GTP-U).

Figure 15 shows a diagram illustrating interfaces where the content screening technology is implemented in an IMS-based network architecture according to an embodiment of the present invention. The existing ISC interface is adopted between the CS and the CSCF, the existing Sh interface is adopted between the CS and the HSS. The CS and the IP connection access network are connected with each other via the CS-1 interface. The reference point of the IP connection access network is determined by specific network circumstances, which may be the GGSN of the WCDMA/GPRS, the HA of the CDMA2000 and the like. The CS and the CS are connected with each other via the CS-4 interface.

Figure 16 shows a diagram illustrating the content screening technology being implemented in a WCDMA R99 system. The system can be divided into four major portions: the terminal (representing the user), the access network, the core network and the external network, where the terminal, the access network and the core network construct the WCDMA R99 system. Typically, the terminal interacts with the access network via the Uu interface, and the access network interacts with the core network via the Iu interface. Only major network components and interfaces are denoted in the core network, where the MSC/VLR interacts with the CS via the CS-2 interface, the MSC/VLR interacts with the HLR via the D interface, the GMSC and the HLR interact with each other via the C interface, the MSC/VLR and the GMSC interact with each other as well as the GMSC and the external PSTN interact with each other using the SS7 signaling born over the TDM, the SGSN and the HLR interact with each other via the Gr interface, the SGSN interacts with the GGSN via the Gn interface, the SGSN interacts with the CS via the CS-1 interface, the GGSN interacts with the HLR via the Gc interface, the GGSN and the external Internet interact with each other via the Gi interface, and the CS and the HLR interact with each other via the CS-3 interface. The MSC/VLR and the GMSC are major components of the circuit domain, through which the terminal implements the circuit domain service interaction within the WCDMA network, or accesses external circuit domain service networks such as the PSTN and the like. The SGSN and the GGSN are major components of the packet domain, through which the terminal implements the packet domain service interaction within the WCDMA network, or accesses the Internet. Specifically, the CS and the HLR serve not only the circuit domain components but also the packet domain components.

Based on the above application network circumstance, it is assumed here that the CS uses the "Common Policy" of the IETF (referring to "draft-ieft-geopriv-common-policy" in the "www.ietf.org" website) to describe the content screening rules, and meanwhile uses the semantics mapping table to carry out matching and conversion for different semantics of screening rule, so that the content screening rules may correctly be mutually identified and converted between different CSes. An example is described hereinbelow.

The "Common Policy" of the IETF is described using the XML, defines an authorization policy framework related to application data access control, and clarifies the description manner of common policy rules. The common policy framework can be extended to other application fields. Specifically, the "Policy" is a "Rule Set", which is composed of a lot of "Rules", and each "Rule" includes three parts: "Conditions", "Actions" and "Transformations". The "Conditions" are a set of condition expressions, and each condition expression may be TRUE or alternatively may be FALSE. When there is a content screening request arrives, it is required to match it with each "Rule" in the "Rule Set", and the "Rule" with all the condition expressions of its "Conditions" part being TRUE is the "Rule" applicable for the request. The "Actions" are operation behaviors for specifically screening the contents, and the "Transformations" are modification operations with respect to specific contents sent to the user.

Here, the semantics mapping table is used to carry out matching and conversion for different semantics of screening rule. A specific semantics mapping table is as illustrated in Table 1 below. In the CS, a database or a simple program may be used to represent the semantics mapping table, thus to provide search services and return result information of the matching operation.

**Table 1:**

| Region | China | U.S.A |
|---|---|---|
| Mapping | S1 | Sex2 |
| | S2 | Sex2 |
| | S3 | Sex1 |
| | S4 | Sex0 |
| | V1 | Violence4 |
| | V2 | Violence2 |

Based on the above, it is assumed that the public content screening rule of the content screening server C located in China is specifically as follows:

```
     <?xml version=" 1.0" encoding="UTF-8"?>
        <ruleset xmlns="urn:ietf:params:xml:ns:common-policy">
           <rule id="china0000001">
             <conditions>
               <any-identity/>
               <content>
                   <id entity="XXX">
                   <id entity="XX">
                   <id entity="XXXX">
                   <id entity="XXXXXXX">
                </content>
             </conditions>
             <actions>
               <block/>
             </actions>
             <transformations/>
          </rule>
        </ruleset>
```

In the above "rule set", with respect to the rule with a "rule id" of "china0000001 ", when the following 2 "conditions" are met:
1) any user; and
2) the content portion contains "XXX", or "XX", or "XXXX", or "XXXXXXX"; then

The executed "action" is "block", i.e. screening the contents off.

Meanwhile, it is assumed that the private screening rule set for the user A in the content screening server C in China is as follows:

```
     <?xml version=" 1.0" encoding="UTF-8"?>
        <ruleset xmlns="urn:ietf:params:xml:ns:common-policy">
         <rule id="china0011253">
             <conditions>
               < identity>
                  <id entity="bob@china.com">
               </ identity>
               <content>
                  <category entity=S3>
               </content>
             </conditions>
             <actions>
               <block>
             </actions>
           </rule>
        </ruleset>
```

In the above "rule set", with respect to the rule with a "rule id" of "china0011253", when the following 2 "conditions" are met:
1) the "identity>" is "bob@china.com"; and
2) the content category is "S3"; then

The executed "action" is "block", i.e. screening the contents off.

It is assumed that the public content screening rule of the content screening server U in the U.S.A is specifically as follows:

```
     <?xml version=" 1.0" encoding="UTF-8"?>
        <ruleset xmlns="urn:ietf:params:xml:ns:common-policy">
           <rule id="usa00000001">
             <conditions>
               <any-identity/>
               <content>
                  <category entity=Sex0>
                  <category entity=Violence 1>
               </content>
             </conditions>
             <actions>
               <block/>
             </actions>
             <transformations/>
           </rule>
     </ruleset>
```

In the above "rule set", with respect to the rule with a "rule id" of "usa00000001", when the "conditions" 1) any user; and 2) the content category is "Sex0" or "Violence1" are met, then the executed "action" is "block", i.e. screening the contents off.

As a result, when the user A in China roams to the U.S.A, the content screening server U of the U.S.A needs to obtain the public screening rule of the home-network content screening server C of the user A and the private screening rule set for the user A, and carry out corresponding processing for the obtained screening rules and the public screening rule of the content screening server U. Specific processes are as follows:
1) The content screening server U obtains the public screening rule and the private screening rule of the user A from the content screening server C; and
2) On the public screening rule of the content screening server U, the public screening rule and the private screening rule of the content screening server C with respect to the user A are reflected, thus to as a whole function as the screening rule of the received and/or sent contents with respect to the user A when in the U.S.A.

For the reason that the "common policy" is used by all screening rule syntax description, the content screening servers U and C can understand each other without a syntax description conversion between different screening rules. Regarding the case that the keywords contained in the content portion are directly taken for use, for the reason that different category ways are used by the content screening servers U and C, a specific example of which is as illustrated in the above Table 1, thus it is required to use the semantics mapping table to carry out a conversion for the category. According to the semantics mapping table 1, the "S3" of China is understood as the "Sex1" at the content screening server U. According to the category level rule of the U, the level of the "Sex1" is lower than the "Sex0", thus it is also required to reflect the "Sex1" in the private rule of the user A. Based on these processing, the following screening rule is formed in the content screening server U of the U.S.A:

```
     <?xml version="1.0" encoding="UTF-8"?>
        <ruleset xmlns="urn:ietf:params:xml:ns:common-policy">
           <rule id="usa00000001">
             <conditions>
               <any-identity/>
               <content>
                  <category entity=Sex0>
                 <category entity=Violence1>
               </content>
             </conditions>
             <actions>
               <block/>
             </actions>
             <transformations/>
          </rule>
          <rule id="usa0123501">
             <conditions>
               < identity>
                 <id entity="bob@china.com">
               </ identity>
               <content>
                 <category entity=Sex1>
                 <id entity="XXX">
                   <id entity="XX">
                   <id entity="XXXX">
                   <id entity="XXXXXXX">
               </content>
             </conditions>
             <actions>
               <block/>
             </actions>
             <transformations/>
          </rule>
        </ruleset>
```

As a result, in the above "rule set", on the basis that the original public rule, i.e. the "rule id" of "usa00000001", is unchanged, the rule with the "rule id" of "ursa0123501" is added. When the following 2 conditions are met:
1) the "identity" is "bob@china.com"; and
2) the content category is "Sex1", or the content portion contains "XXX", or "XX", or "XXXX", or "XXXXXXX"; then

The executed "action" is "block", i.e. screening the contents off.

An embodiment is taken as an example to describe the specific implementation processes of the method of the present invention. It is assumed that the user A is a subscription user at a site F based on the WCDMA R99 network of China, and he sets a content screening service at the CS-B of the site F. When the user A roams to a site G, he connects to the internet via the WCDMA R99 network of the site G. For the reason that the whole policy of the operators is to make the visited network to assign an IP address for connecting the internet when roaming, thus the user A accesses the external Internet through the GGSN-S, and therefore the specific processes for screening the received and/or sent contents of the user A at the site G may be as follows:

Screening rule obtaining and contents screening: a certain content provider of the Internet network sends the contents that the user A requests to the GGSN-S according to the IP address of the user A; and the GGSN-S sends them to the SGSN-S via the Gn interface according to the IP address of the user A, and the SGSN-S searches for the IMSI of the user A according to the received IP address, sends the received contents and the searched-out IMSI to the content screening server CS-S of the site G, and requests it to screen the contents.

The CS-S does not search out the roaming state record of the user A according to the received IMSI, and then requests the VLR-S of the site G to search for the address of the site F of the home network. The VLR-S searches for the address of the HLR thereof according to the IMSI, and then return the address of the HLR-B of the site F to the CS-S. The CS-S requests the HLR-B for the screening rule of the user A, and carries its own address. The HLR-B forwards the request to the CS-B of the site F. The CS-B searches for the roaming state record thereof according to the IMSI of the user A, and finds that its roaming identifier is not-roaming. The CS-B sets it as roaming-out, and stores the address of the CS-S. The CS-B sends its own public screening rule, the private screening rule set for the user A, and the address of the CS-B to the CS-S. The CS-S adds the A into the user roaming state record, stores the address of the CS-B, processes and stores the obtained screening rule, properly associates the stored screening rule with the IMSI, and sets the roaming identifier of the user A as roaming-in. For the reason that the CS-S and the CS-B use the same syntax and are based on the same category levels, there is no need to carry out identification and conversion of syntax and semantics.

If the CS-S searches out the roaming state record of the user A according to the received IMSI and the roaming identifier thereof is roaming-in, the CS-S matches out corresponding screening rules, including the public screening rule of the CS-S, the public screening rule of the CS-B and the private screening rule of the user A, in the roaming state record of the user A according to the IMSI.

The CS-S screens the contents based on its own public screening rule with the public screening rule of the CS-B and the private screening rule of the user A both being reflected, and records the current time of each screening processing as the latest execution time. The CS-S sends the screened contents and the IMSI to the SGSN-S. The SGSN-S carries out corresponding processing for the screened contents according to the IMSI and sends them to the WCDMA R99 access network of the site G via which to send them to the user A roaming in the site G.

Rule update processing: if the public screening rule of the CS-B is changed, the CS-B sends the changed public screening rule to the CS-S according to the address of the CS-S recorded in the roaming state record of the user A, and requests the CS-S to carry out rule update processing, where the request message carries the IMSI of the user A. The CS-S searches for the user roaming state record according to the IMSI, finds that the recorded roaming identifier is roaming-in, and then updates the originally stored public screening rule of the CS-B using the received screening rule. The CS-S returns an update success response message to the CS-B.

Rule deletion processing: if the CS-S detects that the specified 48 hours from the current time to the time of the latest content screening processing carried out for the received and/or sent contents of the user A has been exceeded, the CS-S deletes all the records in the roaming state record of the user A, including the originally stored screening rule obtained from the CS-B side. The CS-S notifies the CS-B to delete the roaming state record of the user A, where the notification message carries the IMSI of the user A and the address of the CS-S. The CS-B searches for the user roaming state record according to the IMSI, finds that the recorded roaming identifier therein is roaming-out and the recorded address of the CS is the same as the received address of the CS, and then deletes the roaming records of the user A. The CS-B returns a deletion success response message to the CS-S.

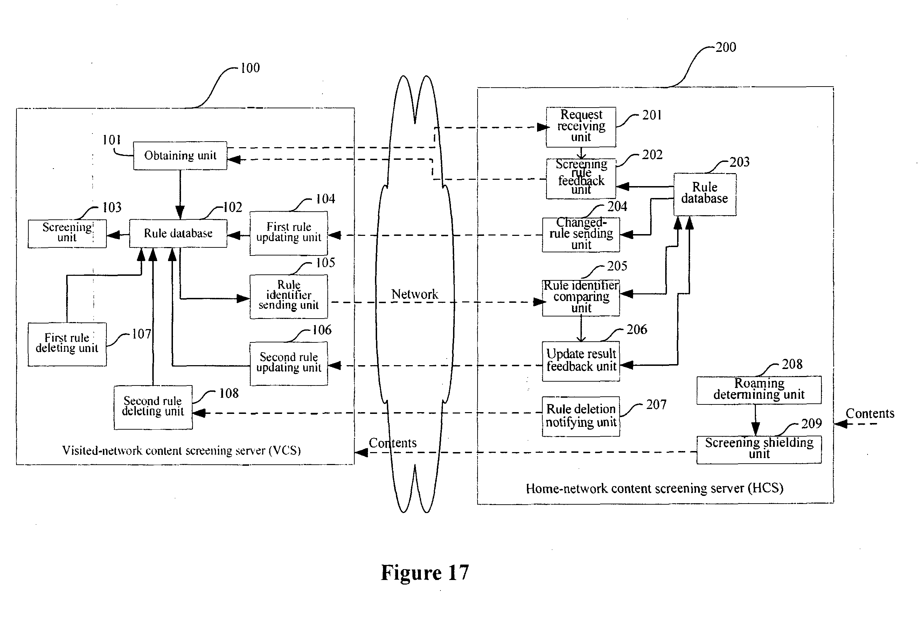

Figure 17 shows a diagram illustrating a system structure resulted from implementation of the above embodiments of the present invention and illustrating processing structures inside the VCS and the HCS thereof. Specifically, the Visited-network Content Screening Sever (VCS) 100 may obtain the screening rule of the home network of the roaming user which is used for screening the received and/or sent contents of the user, and screen the received and/or sent contents of the roaming user based on the obtained screening rule. The Home-network Content Screening Sever (HCS) 200 sends the screening rule for screening the received and/or sent contents of the user to the VCS 100 according to an obtaining request sent from the VCS 100. It may be required for the VCS 100 to convert the screening rule obtained from the HCS 200 into syntax and semantics recognizable to itself, and screen the received and/or sent contents of the roaming user based on the converted screening rule. Moreover, if the VCS 100 stores its own screening rule for screening all the received and/or sent contents, it is also required to screen the received and/or sent contents of the roaming user based on its own screening rule for screening the received and/or sent contents. In this case, the VCS 100 may need to combine its own screening rule and the screening rule obtained from the HCS 200, and screens the received and/or sent contents of the roaming user based on the combined screening rule. If the present first roaming mode is utilized, the received and/or sent contents of the roaming user are also required to be processed by the home network. Thus, in this case, the HCS 200 is shielded from screening these contents, and the home network directly sends these contents to the visited network in which the roaming user resides to carry out content screening processing.

In the VCS 100, an obtaining unit 101 obtains the screening rule for screening the received and/or sent contents of the user from the home network of the roaming user. In the HCS 200, a request receiving unit 201 is used for receiving an obtaining request sent from the VCS 100 in the visited network in which the roaming user resides, where the obtaining request is used for requesting the screening rule for screening the received and/or sent contents of the user; and a screening rule feedback unit 202 is used for searching for the screening rule for screening the received and/or sent contents of the user in its own rule database 203 according to the obtaining request received by the request receiving unit 201, and feeding it back to the VCS 100.

The rule database 102 in the VCS 100 stores the screening rule obtained by the obtaining unit 101, and additionally the rule database 102 may also store the screening rule of the VCS 100 itself which is used for screening the received and/or sent contents. A screening unit 103 is used for carrying out screening processing for the received and/or sent contents of the roaming user based on the screening rule stored in the rule database 102.

When detecting that the screening rule for screening the received and/or sent contents of the user stored in the rule database 203 is changed, the changed-rule sending unit 204 in the HCS 200 sends the changed screening rule to the VCS 100 in the visited network in which the roaming user resides. A first rule updating unit 104 in the VCS 100 updates the obtained screening rule stored in the rule database 102 based on the changed screening rule sent from the home network of the roaming user when the screening rule for screening the received and/or sent contents of the user is changed.

In addition, when obtaining the screening rule, the obtaining unit 101 in the VCS 100 also obtains the rule identifier corresponding to the screening rule, and stores the obtained rule identifier and the obtained screening rule correspondingly to each other into the rule database 102. In this way, when subsequently the VCS wants to update the stored screening rule stored in the rule database 102, the rule identifier sending unit 105 extracts the stored rule identifier from the rule database 102 and sends it to the home network of the roaming user. For example, the rule identifier sending unit 105 may subsequently sends the rule identifier to the home network of the roaming user at each time the VCS receives contents sent to or from the roaming user. The rule identifier comparing unit 205 in the HCS 200 carries out a comparison to determine whether the rule identifier sent from the VCS 100 in the visited network in which the roaming user resides is consistent with the rule identifier stored correspondingly to the roaming user in the rule database 203. An update result feedback unit 206 feeds back a screening-rule-unchanged notification to the VCS 100 in the visited network in which the roaming user resides when the comparison of the rule identifier comparing unit 205 results in consistence, and sends a new screening rule and a corresponding new rule identifier thereof to the VCS 100 in the visited network in which the roaming user resides when the comparison results in inconsistence. A second rule updating unit 106 in the VCS 100 updates the screening rule and the corresponding rule identifier thereof stored in the rule database 102 according to the new screening rule and the corresponding new rule identifier thereof sent from the home network of the roaming user when the rule identifier sent from the rule identifier sending unit 105 is inconsistent with the rule identifier stored correspondingly to the roaming user.

Specifically, with respect to the above two types of rule updating ways, one or both of them may be used during specific implementation, and it may also be considered to use other rule updating ways.

A first rule deleting unit 107 in the VCS deletes the obtained screening rule stored in the rule database 102 when detecting that there is no content sent to or from the roaming user during a specified period of time. Alternatively, a rule deletion notifying unit 207 in the HCS 200 notifies the VCS 100 in the visited network to delete the obtained screening rule when detecting that the roaming user moves out of the present visited network, and then a second rule deleting unit 108 in the VCS 100 deletes the obtained screening rule stored in the rule database 102 according to the rule deletion notification sent to the visited network from the home network of the roaming user when detecting that the roaming user moves out of the visited network. Specifically, with respect to the above two types of rule deleting ways, one or both of them may be used during specific implementation, and it may also be considered to use other rule deleting ways.

In the case that the first roaming mode is used, the contents sent to the user roaming in the VN are required to be processed by its HN. Thus, in this case, the HCS 200 in the HN is required to include a roaming determining unit 208 adapted to determine whether the user is roaming when the received and/or sent contents of the roaming user pass through the home network; and a screening shielding unit 209 adapted to shield the screening processing of the received and/or sent contents of the user when the user is roaming, where the HN sends the contents required to be screened to the VN in which the roaming user presently resides for screening.

In addition, an embodiment of the present invention provides a content screening server, which includes: a rule obtaining unit and a screening unit. Specifically, the rule obtaining unit is adapted to obtain, in a second network, a screening rule of a first network of a roaming user which is used for screening received and/or sent contents of the user; and the screening unit is adapted to screen, according to the screening rule, the received and/or sent contents of the roaming user.

Preferably, the content screening server further includes at least one of the following units: a converting unit, and a self screening unit. Specifically, the converting unit is adapted to convert, in the second network, the screening rule obtained by the rule obtaining unit into syntax and semantics recognizable to the screening unit, and send the converted screening rule to the screening unit; and the self screening unit is adapted to screen, in the second network, the received and/or sent contents of the roaming user according to a screening rule of the second network itself.

In other words, the units that the content screening server may includes are comprised of three cases as follows:

Case 1: The rule obtaining unit, the screening unit, and the converting unit are included. Specifically, the converting unit is connected with the rule obtaining unit and the screening unit respectively.

Case 2: The rule obtaining unit, the screening unit, and the self screening unit are included. Specifically, the connection ways of each of the units may be that the screening unit and the self screening unit are connected with the rule obtaining unit respectively; or alternatively may be that the screening unit is connected with the rule obtaining unit and the self screening unit respectively; or alternatively may be that the self screening unit is connected with the rule obtaining unit and the screening unit respectively.

Case 3: The rule obtaining unit, the screening unit, the converting unit, and the self screening unit are included. Specifically, the specific connection ways of each of the units may be that the converting unit is connected with the rule obtaining unit and the screening unit respectively, and the self screening unit is then connected with the screening unit; or alternatively may be that the converting unit is connected with the rule obtaining unit and the screening unit respectively, and the self screening unit is then connected with the rule obtaining unit.

Preferably, on the basis of the above disclosure, the content screening server may further include: a combining unit, adapted to combine at least one of the screening rule obtained by the rule obtaining unit and the received screening rule converted by the converting unit with a screening rule of the second network itself, and send the combined screening rule to the screening unit. In the preferred solution, it may only include that the rule obtaining unit is connected with the combining unit, or alternatively may include that the rule obtaining unit, the converting unit, the combining unit and the screening unit are connected in sequence, or alternatively may respectively add a combining unit on the basis of the above circumstances.

Preferably, the content screening server further includes at least one of following units: a first rule updating unit and a first rule deleting unit. Specifically, the first rule updating unit is adapted to update, according to a changed screening rule sent from the first network of the roaming user when the screening rule for screening the received and/or sent contents of the user is changed, the obtained screening rule; and the first rule deleting unit is adapted to delete, when the second network detects that there is no received and/or sent content of the roaming user during a specified period of time, the obtained screening rule.

It should be noted from the above that when the first network is a home network, the second network is a visited network; or when the first network is a visited network, the second network is a home network.

Preferably, when the content screening server serves a visited network, the rule obtaining unit includes: a first rule obtaining sub-unit, and further includes: a rule identifier obtaining sub-unit, a rule identifier sending unit and a second rule updating unit. Specifically, the first rule obtaining sub-unit is adapted to obtain, when the visited network detects the roaming user for a first time or receives the received and/or sent contents of the roaming user for a first time, the screening rule of a home network of the roaming user which is used for screening the received and/or sent contents of the user. The rule identifier obtaining sub-unit is adapted to obtain, when obtaining the screening rule, a rule identifier corresponding to the screening rule; the rule identifier sending unit is adapted to send the rule identifier to the home network of the roaming user; and the second rule updating unit is adapted to update, according to a new screening rule and a corresponding new rule identifier sent from the home network of the roaming user when the rule identifier sent from the rule identifier sending unit is inconsistent with a rule identifier stored correspondingly to the roaming user, the stored screening rule and corresponding rule identifier.

Preferably, when the content screening server serves a visited network, the content screening server further includes: a second rule deleting unit, adapted to delete, when receiving a rule deleting notification sent from a home network when detecting that the roaming user moves out of the visited network, the obtained screening rule.

Preferably, when the content screening server serves a home network, the rule obtaining unit includes:

a second rule obtaining sub-unit, adapted to obtain, when the home network detects successful registration of the roaming user for a first time, the screening rule of a visited network of the roaming user which is used for screening the received and/or sent contents of the user.

Preferably, when the content screening server serves a visited network, the content screening server further includes:

a third rule deleting unit, adapted to delete, when the home network detects registration release of the roaming user, the obtained screening rule.

The implementation processes of the functions and operations of each of the units in the content screening server are described in detail in the implementation process of corresponding processes in the above method, and are not described repeatedly herein.

To sum up, being compared with the prior art, according to the embodiments of the present invention, for the reason that the visited network/the home network takes the content screening rule of the home network/the visited network for use, thus when the user is roaming in the visited network, the contents are required to be respectively processed at the home network and the visited network in the first roaming mode can be avoided, thereby shortening the screening processing time and reducing the time for the user to wait for the contents, and therefore improving the using experience of the user. Moreover, the embodiments of the present invention are compatible to the second roaming mode, thus may avoid the contents being transmitted between the home network and the visited network, and therefore are not influenced by the fault of the intermediate transmission or the fault of the content screening provider of another party, thereby facilitating the normal execution of the content service. In addition, the embodiments of the present invention are compatible to the first roaming mode, and conform to the home domain control principle of the IMS.

It should be noted that those ordinarily skilled in the art shall understand that all or part of the processes m the above embodiments of the method can be implemented by program instructing relevant hardware, and the program, which includes the processes of the above method when executed (the contents of the processes have been described in detail hereinabove and are not descnbed repeatedly herein), may be stored in a computer readable storage medium, which may be an ROM/RAM, a magnetic disk, an optical disk and the like.

It is apparent that those skilled m the art can make variations and modifications to the present invention without departing from the scope of the invention As a result, the invention is untended to encompass those variations and modifications being within the scope defined by the appended claims.

## Claims

1. A method for screening communication contents of a roaming user, comprising:
obtaining, by a second wireless network of the roaming user, a screening rule of a first wireless network of the roaming user which is used for screening received and/or sent contents of the user;
converting, by the second wireless network of the roaming user, the obtained screening rule into syntax and semantics recognizable to the second wireless network;
screening, by the second wireless network of the roaming user, the received and/or sent contents of the roaming user according to the converted screening rule, and screening, the received and/or sent contents of the roaming user according to a screening rule of the second wireless network itself; or combining, by the second wireless network of the roaming user, at least one of the obtained screening rule and the converted screening rule with the screening rule of the second wireless network itself, and screening the received and/or sent contents of the roaming user according to the combined screening rule;
wherein the first wireless network is a home network, and the second wireless network is a visited network; or the first wireless network is a visited network, and the second wireless network is a home network.

2. The method according to claim 1, further comprising:
sending, by the first wireless network when the screening rule for screening the received and/or sent contents of the user is changed, the changed screening rule to the second wireless network; and
updating, by the second wireless network, the obtained screening rule according to the changed screening rule received.

3. The method according to claim 1, further comprising:
deleting, by the second wireless network when detecting that there is no received and/or sent content of the roaming user during a specified period of time, the obtained screening rule.

4. The method according to claim 1, wherein when the wireless second network is a visited network and the first wireless network is a home network, the obtaining a screening rule of a first wireless network of the roaming user which is used for screening received and/or sent contents of the user comprises:
obtaining, by the visited network when detecting the roaming user for a first time or receiving the received and/or sent contents of the roaming user for a first time, the screening rule of the home network of the roaming user which is used for screening the received and/or sent contents of the user; or
when the second wireless network is a home network and the first wireless network is a visited network, the obtaining a screening rule of a first network of the roaming user which is used for screening received and/or sent contents of the user comprises:
obtaining, by the home network when detecting successful registration of the roaming user for a first time, the screening rule from the visited network of the roaming user.

5. The method according to claim 4, wherein when the second wireless network is a home network and the first wireless network is a visited network, the home network deletes, when detecting registration release of the roaming user, the obtained screening rule.

6. The method according to claim 1, wherein when the second wireless network is a visited network and the first wireless network is a home network, the method further comprises:
notifying, by the home network of the roaming user when detecting that the roaming user moves out of the visited network, the visited network to delete the obtained screening rule; and
deleting, by the visited network when receiving the notification, the obtained screening rule.

7. A content screening server (40, 50), comprising:
a rule obtaining unit, adapted to obtain, in a second wireless network, a screening rule of a first wireless network of a roaming user which is used for screening received and/or sent contents of the user;
a converting unit, adapted to convert, in the second wireless network, the screening rule obtained by the obtaining unit into syntax and semantics recognizable to the screening unit, and send the converted screening rule to a screening unit;
the screening unit, adapted to screen, according to the converted screening rule, the received and/or sent contents of the roaming user, and a self screening unit, adapted to screen, in the second wireless network, the received and/or sent contents of the roaming user according to a screening rule of the second wireless network itself; or
a combining unit, adapted to combine at least one of the screening rule obtained by the rule obtaining unit and the received screening rule converted by the converting unit with a screening rule of the second wireless network itself, and send the combined screening rule to a screening unit, and the screening unit, adapted to screen the received and/or sent contents of the roaming user according to the combined screening rule;
wherein the first wireless network is a home network, and the second wireless network is a visited network; or the first wireless network is a visited network, and the second wireless network is a home network.

8. The content screening server according to claim 7, further comprising at least one of following units:
a first rule updating unit, adapted to update, according to a changed screening rule sent from the first wireless network of the roaming user when the screening rule for screening the received and/or sent contents of the user is changed, the obtained screening rule; and
a first rule deleting unit, adapted to delete, when the second wireless network detects that there is no received and/or sent content of the roaming user during a specified period of time, the obtained screening rule.

9. A computer program product, comprising computer program code, which, when executed by a computer unit, causes the computer unit to perform the method of any one of claims 1 to 6.

## Patentansprüche

1. Verfahren zum Überprüfen von Kommunikationsinhalten eines Roaming-Anwenders, das Folgendes umfasst:
Erhalten einer Überprüfungsregel eines ersten drahtlosen Netzes des Roaming-Anwenders, die zum Überprüfen von empfangenen und/oder gesendeten Inhalten des Anwenders verwendet wird, durch ein zweites drahtloses Netz des Roaming-Anwenders;
Umsetzen der erhaltenen Überprüfungsregel in Syntax und Semantik, die für das zweite drahtlose Netz erkennbar sind, durch das zweite drahtlose Netz des Roaming-Anwenders;
Überprüfen der empfangenen und/oder gesendeten Inhalte des Roaming-Anwenders gemäß der umgesetzten Überprüfungsregel und Überprüfen der empfangenen und/oder gesendeten Inhalte des Roaming-Anwenders gemäß einer Überprüfungsregel des zweiten drahtlosen Netzes selbst durch das zweite drahtlose Netz des Roaming-Anwenders; oder Kombinieren der erhaltenen Überprüfungsregel und/oder der umgesetzten Überprüfungsregel mit der Überprüfungsregel des zweiten drahtlosen Netzes selbst durch das zweite drahtlose Netz des Roaming-Anwenders,
und Überprüfen der empfangenen und/oder gesendeten Inhalte des Roaming-Anwenders gemäß der kombinierten Überprüfungsregel;
wobei das erste drahtlose Netz ein Heimatnetz ist und das zweite drahtlose Netz ein besuchtes Netz ist; oder das erste drahtlose Netz ein besuchtes Netz ist und das zweite drahtlose Netz ein Heimatnetz ist.

2. Verfahren nach Anspruch 1, das ferner Folgendes umfasst:
Senden, wenn die Überprüfungsregel zum Überprüfen der empfangenen und/oder gesendeten Inhalte des Anwenders geändert wird, der geänderten Überprüfungsregel durch das erste drahtlose Netz zu dem zweiten drahtlosen Netz; und
Aktualisieren der erhaltenen Überprüfungsregel gemäß der empfangenen geänderten Überprüfungsregel durch das zweite drahtlose Netz.

3. Verfahren nach Anspruch 1, das ferner Folgendes umfasst:
Löschen der erhaltenen Überprüfungsregel durch das zweite drahtlose Netz, wenn es detektiert, dass es während einer spezifizierten Zeitspanne keine empfangenen und/oder gesendeten Inhalte des Roaming-Anwenders gibt.

4. Verfahren nach Anspruch 1, wobei dann, wenn das drahtlose zweite Netz ein besuchtes Netz ist und das erste drahtlose Netz ein Heimatnetz ist, das Erhalten einer Überprüfungsregel eines ersten drahtlosen Netzes des Roaming-Anwenders, die zum Überprüfen der empfangenen und/oder gesendeten Inhalte des Roaming-Anwenders verwendet wird, Folgendes umfasst:
Erhalten der Überprüfungsregel des Heimatnetzes des Roaming-Anwenders, die zum Überprüfen der empfangenen und/oder gesendeten Inhalte des Anwenders verwendet wird, durch das besuchte Netz, wenn es den Roaming-Anwender zum ersten Mal detektiert oder die empfangenen und/oder gesendeten Inhalte des Roaming-Anwenders zum ersten Mal empfängt; oder
wenn das zweite drahtlose Netz ein Heimatnetz ist und das erste drahtlose Netz ein besuchtes Netz ist, das Erhalten einer Überprüfungsregel eines ersten Netzes des Roaming-Anwenders, die zum Überprüfen der empfangenen und/oder gesendeten Inhalte des Anwenders verwendet wird, Folgendes umfasst:
Erhalten der Überprüfungsregel von dem besuchten Netz des Roaming-Anwenders durch das Heimatnetz, wenn es die erfolgreiche Eintragung des Roaming-Anwenders zum ersten Mal detektiert.

5. Verfahren nach Anspruch 4, wobei dann, wenn das zweite drahtlose Netz ein Heimatnetz ist und das erste drahtlose Netz ein besuchtes Netz ist, das Heimatnetz die erhaltene Überprüfungsregel löscht, wenn es die Freigabe der Eintragung des Roaming-Anwenders detektiert.

6. Verfahren nach Anspruch 1, wobei dann, wenn das zweite drahtlose Netz ein besuchtes Netz ist und das erste drahtlose Netz ein Heimatnetz ist, das Verfahren ferner Folgendes umfasst:
Benachrichtigen des besuchten Netzes, um die erhaltene Überprüfungsregel zu löschen, durch das Heimatnetz des Roaming-Anwenders, wenn es detektiert, dass sich der Roaming-Anwender aus dem besuchten Netz heraus bewegt; und
Löschen der erhaltenen Überprüfungsregel durch das besuchte Netz, wenn es die Benachrichtigung erhält.

7. Inhaltsüberprüfungsserver (40, 50), der Folgendes umfasst:
eine Regelerhalteeinheit, die ausgelegt ist, in einem zweiten drahtlosen Netz eine Überprüfungsregel eines ersten drahtlosen Netzes eines Roaming-Anwenders, die zum Überprüfen von empfangenen und/oder gesendeten Inhalten des Anwenders verwendet wird, zu erhalten;
eine Umsetzungseinheit, die ausgelegt ist, in dem zweiten drahtlosen Netz die durch die Erhalteeinheit erhaltene Überprüfungsregel in Syntax und Semantik, die für die Überprüfungseinheit erkennbar sind, umzusetzen und die umgesetzte Überprüfungsregel zu einer Überprüfungseinheit zu senden;
die Überprüfungseinheit, die ausgelegt ist, gemäß der umgesetzten Überprüfungsregel die empfangenen und/oder gesendeten Inhalte des Roaming-Anwenders zu überprüfen, und eine Selbstüberprüfungseinheit, die ausgelegt ist, in dem zweiten drahtlosen Netz die empfangenen und/oder gesendeten Inhalte des Roaming-Anwenders gemäß einer Überprüfungsregel des zweiten drahtlosen Netzes selbst zu überprüfen; oder
eine Kombinationseinheit, die ausgelegt ist, die von der Regelerhalteeinheit erhaltene Überprüfungsregel und/oder die von der Umsetzungseinheit umgesetzte erhaltene Überprüfungsregel mit einer Überprüfungsregel des zweiten drahtlosen Netzes selbst zu kombinieren und die kombinierte Überprüfungsregel zu einer Überprüfungseinheit zu senden, und wobei die Überprüfungseinheit ausgelegt ist, die empfangenen und/oder gesendeten Inhalte des Roaming-Anwenders gemäß der kombinierten Überprüfungsregel zu überprüfen;
wobei das erste drahtlose Netz ein Heimatnetz ist und das zweite drahtlose Netz ein besuchtes Netz ist; oder das erste drahtlose Netz ein besuchtes Netz ist und das zweite drahtlose Netz ein Heimatnetz ist.

8. Inhaltsüberprüfungsserver nach Anspruch 7, der ferner wenigstens eine der folgenden Einheiten umfasst:
eine erste Regelaktualisierungseinheit, die ausgelegt ist, die erhaltene Überprüfungsregel gemäß einer geänderten Überprüfungsregel, die von dem ersten drahtlosen Netz des Roaming-Anwenders gesendet wird, wenn die Überprüfungsregel zum Überprüfen der empfangenen und/oder gesendeten Inhalte des Anwenders geändert wird, zu aktualisieren; und
eine erste Regellöschungseinheit, die ausgelegt ist, die erhaltene Überprüfungsregel zu löschen, wenn das zweite drahtlose Netz detektiert, dass es während einer spezifizierten Zeitspanne keine empfangenen und/oder gesendeten Inhalte des Roaming-Anwenders gibt.

9. Computerprogrammprodukt, das Computerprogrammcode umfasst, der dann, wenn er durch eine Computereinheit ausgeführt wird, bewirkt, dass die Computereinheit das Verfahren nach einem der Ansprüche 1 bis 6 ausführt.

## Revendications

1. Procédé de filtrage de contenus de communication d'un utilisateur itinérant, comprenant :
l'obtention, par un second réseau sans fil de l'utilisateur itinérant, d'une règle de filtrage d'un premier réseau sans fil de l'utilisateur itinérant qui est utilisée pour filtrer les contenus reçus et/ou envoyés de l'utilisateur ;
la conversion, par le second réseau sans fil de l'utilisateur itinérant, de la règle de filtrage obtenue en une syntaxe et une sémantique reconnaissables par le second réseau sans fil ;
le filtrage, par le second réseau sans fil de l'utilisateur itinérant, des contenus reçus et/ou envoyés de l'utilisateur itinérant en fonction de la règle de filtrage convertie, et le filtrage des contenus reçus et/ou envoyés de l'utilisateur itinérant en fonction d'une règle de filtrage propre au second réseau sans fil ; ou la combinaison, par le second réseau sans fil de l'utilisateur itinérant, d'au moins l'une de la règle de filtrage obtenue et de la règle de filtrage convertie avec la règle de filtrage propre au second réseau sans fil, et le filtrage des contenus reçus et/ou envoyés de l'utilisateur itinérant en fonction de la règle de filtrage combinée ;
dans lequel le premier réseau sans fil est un réseau de rattachement, et le second réseau sans fil est un réseau visité ; ou le premier réseau sans fil est un réseau visité et le second réseau sans fil est un réseau de rattachement.

2. Procédé selon la revendication 1, comprenant en outre :
l'envoi, par le premier réseau sans fil quand la règle de filtrage pour filtrer les contenus reçus et/ou envoyés de l'utilisateur est changée, de la règle de filtrage changée au second réseau sans fil ; et
l'actualisation, par le second réseau sans fil, de la règle de filtrage obtenue en fonction de la règle de filtrage changée reçue.

3. Procédé selon la revendication 1, comprenant en outre :
la suppression, par le second réseau sans fil à la détection d'une absence de contenu reçu et/ou envoyé de l'utilisateur itinérant durant une période de temps spécifiée, de la règle de filtrage obtenue.

4. Procédé selon la revendication 1, dans lequel quand le second réseau sans fil est un réseau visité et le premier réseau sans fil est un réseau de rattachement, l'obtention d'une règle de filtrage d'un premier réseau sans fil de l'utilisateur itinérant qui est utilisée pour filtrer les contenus reçus et/ou envoyés de l'utilisateur comprend :
l'obtention, par le réseau visité à la première détection de l'utilisateur itinérant ou à la première réception des contenus reçus et/ou envoyés de l'utilisateur itinérant, de la règle de filtrage du réseau de rattachement de l'utilisateur itinérant qui est utilisée pour filtrer les contenus reçus et/ou envoyés de l'utilisateur ; ou
quand le second réseau sans fil est un réseau de rattachement et le premier réseau sans fil est un réseau visité, l'obtention d'une règle de filtrage d'un premier réseau de l'utilisateur itinérant qui est utilisée pour filtrer les contenus reçus et/ou envoyés de l'utilisateur comprend :
l'obtention, par le réseau de rattachement à la première détection d'un enregistrement correct de l'utilisateur itinérant, de la règle de filtrage à partir du réseau visité de l'utilisateur itinérant.

5. Procédé selon la revendication 4, dans lequel quand le second réseau sans fil est un réseau de rattachement et le premier réseau sans fil est un réseau visité, le réseau de rattachement supprime, à la détection d'un arrêt d'enregistrement de l'utilisateur itinérant, la règle de filtrage obtenue.

6. Procédé selon la revendication 1, comprenant en outre quand le second réseau sans fil est un réseau visité et le premier réseau sans fil est un réseau de rattachement :
la notification, par le réseau de rattachement de l'utilisateur itinérant lorsqu'il est détecté que l'utilisateur itinérant quitte le réseau visité, au réseau visité de supprimer la règle de filtrage obtenue ; et
la suppression, par le réseau visité, à la réception de la notification, de la règle de filtrage obtenue.

7. Serveur de filtrage de contenus (40, 50) comprenant :
une unité d'obtention de règle, adaptée pour obtenir, dans un second réseau sans fil, une règle de filtrage d'un premier réseau sans fil d'un utilisateur itinérant qui est utilisée pour filtrer les contenus reçus et/ou envoyés de l'utilisateur ;
une unité de conversion, adaptée pour convertir, dans le second réseau sans fil, la règle de filtrage obtenue par l'unité d'obtention en une syntaxe et une sémantique reconnaissables par l'unité de filtrage, et envoyer la règle de filtrage convertie à une unité de filtrage ;
l'unité de filtrage, adaptée pour filtrer, en fonction de la règle de filtrage convertie, les contenus reçus et/ou envoyés de l'utilisateur itinérant, et une unité d'auto-filtrage,
adaptée pour filtrer, dans le second réseau sans fil, les contenus reçus et/ou envoyés de l'utilisateur itinérant en fonction d'une règle de filtrage propre au second réseau sans fil ; ou
une unité de combinaison, adaptée pour combiner au moins l'une de la règle de filtrage obtenue par l'unité d'obtention de règle et de la règle de filtrage reçue convertie par l'unité de conversion avec une règle de filtrage propre au second réseau sans fil, et envoyer la règle de filtrage combinée à une unité de filtrage, l'unité de filtrage étant adaptée pour filtrer les contenus reçus et/ou envoyés de l'utilisateur itinérant en fonction de la règle de filtrage combinée ;
dans lequel le premier réseau sans fil est un réseau de rattachement, et le second réseau sans fil est un réseau visité ; ou le premier réseau sans fil est un réseau visité et le second réseau sans fil est un réseau de rattachement.

8. Serveur de filtrage de contenus selon la revendication 7, comprenant en outre au moins l'une des unités suivantes :
une première unité d'actualisation de règle, adaptée pour actualiser, en fonction d'une règle de filtrage changée envoyée depuis le premier réseau sans fil de l'utilisateur itinérant quand la règle de filtrage pour filtrer les contenus reçus et/ou envoyés de l'utilisateur est changée, la règle de filtrage obtenue ; et
une première unité de suppression de règle, adaptée pour supprimer, quand le second réseau sans fil détecte l'absence de contenu reçu et/ou envoyé de l'utilisateur itinérant durant une période de temps spécifiée, la règle de filtrage obtenue.

9. Produit de programme informatique, comprenant un code de programme informatique, qui, lorsqu'il est exécuté par une unité informatique, amène l'unité informatique à exécuter le procédé selon l'une quelconque des revendications 1 à 6.
